# EUROPEAN PATENT APPLICATION

(11) **EP 4 718 546 A1**
(43) Date of publication of application: **01.04.2026**
(21) Application number: 24203596.2
(22) Date of filing: 30.09.2024
(51) Int. Cl.: H01M 10/04, H01M 10/0587, H01M 50/107, H01M 50/179, H01M 50/538, H01M 50/533

(54) **BATTERY CELL COMPONENT FOR A BATTERY CELL OF A VEHICLE, BATTERY CELL, METHOD FOR MANUFACTURING A BATTERY CELL COMPONENT OR A BATTERY CELL, AND VEHICLE**

(71) Applicant: Volvo Car Corporation, 405 31 Göteborg (SE)
(72) Inventor: KARLSSON, Daniel, 40531 Göteborg (SE)
(74) Representative: Maiwald GmbH

(57) **Abstract**

The disclosure relates to a battery cell component (22) for a battery cell (14) of a vehicle. The battery cell component (22) comprises an elongated core element (24) extending along a direction of extension (A) and being electrically conductive. The battery cell component (22) further comprises a first electrode sheet (36). The first electrode sheet (36) is electrically coupled to the elongated core element (24). The first electrode sheet (36) is windable or wound around the elongated core element (24). Additionally, a battery cell (14) for a vehicle is described. Furthermore, a method for manufacturing a battery cell component (22) or a battery cell (14) is shown. Also, a vehicle is described.

## Description

### TECHNICAL FIELD

The present disclosure relates to a battery cell component for a battery cell of a vehicle.

Moreover, the present disclosure is directed to a battery cell for a vehicle.

Additionally, the present disclosure relates to a method for manufacturing a battery cell component or a battery cell.

Furthermore, the present disclosure is directed to a vehicle.

### BACKGROUND ART

Recent developments in the field of battery electric vehicles show that the energy density in battery cells in battery systems needs to increase. Battery cells usually comprise an anode and a cathode that are connected to their respective current collectors. The current collectors are connected to their respective terminals. The manufacturing of such battery cells often includes multiple manufacturing steps. Consequently, the complexity of such battery cells is high.

### SUMMARY

It is therefore an objective of the present disclosure to reduce the complexity of battery cells, while improving the energy density of such battery cells.

The problem is at least partially solved or alleviated by the subject matter of the independent claims of the present disclosure, wherein further examples are incorporated in the dependent claims.

According to a first aspect, there is provided a battery cell component for a battery cell of a vehicle. The battery cell component comprises:
- an elongated core element extending along a direction of extension and being electrically conductive, and
- a first electrode sheet, wherein the first electrode sheet is electrically coupled to the elongated core element and wherein the first electrode sheet is windable or wound around the elongated core element.

In this context, the elongated core element may be understood as an electrically conductive bar or rod. The elongated core element may comprise electrically conductive material or may be made of electrically conductive material. The direction of extension of the elongated core element may be seen as a direction in which the bar or rod substantially extends, i.e. the direction of the largest extension of the elongated core element. The first electrode sheet may be a foil being electrically conductive. It is noted that the first electrode sheet being windable means that the first electrode sheet is bendable at least to a certain extent. The present disclosure comprises two alternatives. The first alternative describes the case, in which the first electrode sheet is windable around the elongated core element. In other words, the first electrode sheet may assume a flat shape or may assume any other shape while not being wound around the elongated core element. The second alternative describes the case, in which the first electrode sheet is wound around the elongated core element. This means that the first electrode sheet is not flat, but bent around the elongated core element. The first electrode sheet may be wound around the elongated core element in several turns. Thus, the first electrode sheet may be provided in a manner that allows to arrange a comparatively large surface of the first electrode sheet in a comparatively small space. This has the effect that many electrons may be generated in a comparatively small space. This means that the efficiency and energy density in a battery cell equipped with such a battery cell component may be comparatively high. By electrically coupling the first electrode sheet to the elongated core element, an area that may transfer current from the first electrode sheet to the elongated core element or vice versa is comparatively large, thus, further increasing efficiency of a battery cell equipped with such a battery cell component. Further, complexity of a battery cell equipped with such a battery cell component may be decreased. This is because no further components or parts are needed to achieve such electrical connection.

In an example, the elongated core element is made of a metal material or comprises a metal material. In more detail, the elongated core element may be made of aluminum material, copper material, steel material, or an alloy comprising one or more of these materials. Preferably, the elongated core element may be made of aluminum material, if the first electrode sheet is made of aluminum material. Further, preferably, the elongated core element may be made of copper material, if the first electrode sheet is made of copper material. Generally speaking, the elongated core element may be made of the same material as the first electrode sheet. By using metal material, the stability and structural strength of the battery cell component may be improved. Moreover, metal material offers good electric properties.

In another example, the first electrode sheet is mechanically connected to the elongated core element. This mechanical connection leads to a more secure and reliable electrical connection between the first electrode sheet and the elongated core element. The mechanical connection may be achieved by using a welding process, e.g., a laser welding process. This has the effect that the stability and structural strength of the battery cell component may be further improved.

According to an example, the elongated core element has a cylindrical shape. The cylindrical shape may be understood as a shape of a generalized cylinder. This means that the cross section of the cylinder can be circular but is not necessarily circular. This has the effect that the shape of the elongated core element is rather simple. Thus, manufacturing of the battery cell component may be facilitated. Other examples of cross-sectional shapes include rectangle, square, hexagon, octagon, and oval.

In an example, the elongated core element with cylindrical shape has a diameter of 5 mm or less than 5 mm. In this context, the elongated core element may be formed as a circular cylinder. This dimension has proven to be a good compromise between mechanical stability, ease of manufacturing and achievable energy density in a battery cell using the battery cell component.

According to an example, the battery cell component further comprises one or more of a second electrode sheet, a first separator sheet, and a second separator sheet. The one or more of the second electrode sheet, the first separator sheet, and the second separator sheet and the first electrode sheet are layered. Additionally, the one or more of the second electrode sheet, the first separator sheet, and the second separator sheet are windable or wound around the elongated core element. The second electrode sheet may be a foil being electrically conductive. Both, the first separator sheet and the second separator sheet may not be electrically conductive, i.e. the first separator sheet and the second separator sheet are electrical insulators. Layering the different sheets means that the first electrode sheet, the one or more of the second electrode sheet, the first separator sheet and the second separator sheet are stacked. In more detail, the different sheets are arranged in an alternating manner to each other such that, e.g., an electrically conductive first electrode sheet is arranged adjacent to an electrically non-conductive first separator sheet, the first separator sheet is further arranged adjacent to an electrically conductive second electrode sheet, the second electrode sheet is further arranged adjacent to an electrically non-conductive second separator sheet. In other words, the first separator sheet may be arranged between the first electrode sheet and the second electrode sheet such that the first electrode sheet and the second electrode sheet may not be electrically contacting each other. Further, the second separator sheet may be arranged on the opposite side of the second electrode sheet such that on a first side of the second electrode sheet the first separator sheet is arranged and on a second side of the second electrode sheet the second separator sheet is arranged. This has the effect that the first electrode sheet and the second electrode sheet are not directly contacting each other when being wound around the elongated core element. Moreover, conventionally used and so-called anode current collectors may not be needed. Thus, the complexity and size of such battery cell component is comparatively small. The first electrode sheet, the one or more of the second electrode sheet, the first separator sheet and the second separator sheet wound around the elongated core element may be designated as the so-called jelly roll. This has the effect that many electrons may be generated in a small space. This means that the efficiency and energy density in a battery cell equipped with such a battery cell component may be high.

According to an example, the first electrode sheet or the second electrode sheet is a cathode and the respective other one of the first electrode sheet or the second electrode sheet is an anode. Thus, there are two alternatives comprised by the present disclosure. The first alternative describes the case in which the first electrode sheet is a cathode and the second electrode sheet is an anode. The second alternative describes the case in which the second electrode sheet is an anode and the second electrode sheet is a cathode.

In an example, the elongated core element is made of aluminum material, if the cathode is electrically coupled to the elongated core element. In other words, the elongated core element may be made of aluminum material, if the first electrode sheet is the cathode. Further, the first electrode sheet may be made of aluminum and coated with lithium iron phosphate. The second electrode sheet may be made of copper and coated with graphite. During charging of a battery cell equipped with such a battery cell component, a reduction occurs, where one or more of electrons may move away from the first electrode sheet and ionize, generating one or more of ionized lithium ions and one or more of loose electrons. A battery cell equipped with such a battery cell component may comprise an electrolyte arranged in the battery cell. The one or more of ionized lithium ions may enter the electrolyte and move through first separator sheet and/or the second separator sheet to the second electrode sheet. The one or more of loose electrons may move to the second electrode sheet and drive the oxidation, where one or more of ionized lithium ions and one or more of loose electrons may react with the graphite of the second electrode sheet, forming a lithium ion capacitor.

In another example, the elongated core element is made of copper material, if the anode is electrically coupled to the elongated core element. In other words, the elongated core element may be made of copper material, if the first electrode sheet is the anode.

According to an example, the first electrode sheet extends over at least 85 % of a length of the elongated core element. The length of the elongated core element is measured along the direction of extension. In other words, less than 15 % of a length of the elongated core element may not be covered by the first electrode sheet. This has the effect that a large surface of the elongated core element is covered by the first electrode. In more detail, more electrons may be generated that may move towards the electrically coupled elongated core element. Thus, the efficiency of a battery cell equipped with such a battery cell component may be further enhanced. It is noted that the feature of extending over at least 85% of a length of the elongated core element may also apply to an additional second electrode sheet, first separator sheet, and second separator sheet, in case, the battery cell component further comprises one or more of a second electrode sheet, a first separator sheet, and a second separator sheet.

In another example, the first electrode sheet extends over at least 90 % or at least 95 % of a length of the elongated core element. Thus, the energy density may be further enhanced. As before, it is noted that the feature of extending over at least 90% or at least 95% of a length of the elongated core element may also apply to an additional second electrode sheet, first separator sheet, and second separator sheet, in case, the battery cell component further comprises one or more of a second electrode sheet, a first separator sheet, and a second separator sheet.

According to an example, the first electrode sheet is rectangular and comprises a first edge and a second edge. The first edge is longer than the second edge. The first electrode sheet is electrically coupled to the elongated core element substantially over the entire second edge. This means that the whole second edge is electrically coupled to the elongated core element. This has the effect that more electrons may move from the first electrode sheet towards the electrically coupled elongated core element. Thus, the efficiency of a battery cell equipped with such a battery cell component may be further enhanced. In an example, the first edge and the second edge may be perpendicular to one another.

In an example, a length of the second edge may range from 90mm to 95 mm. In another example, the second edge may be mechanically coupled to the elongated core element, in case, the first electrode sheet is mechanically coupled to the elongated core element.

According to an example, the elongated core element comprises a first end portion and a second end portion. The first end portion and the second end portion are arranged at opposite ends of the elongated core element. One of the first end portion and the second end portion protrudes over the first electrode sheet and the respective other one of the first end portion and the second end portion is flush with the first electrode sheet or is retracted with respect to the first electrode sheet. In more detail, the present disclosure comprises four alternatives. The first alternative describes the case in which the first end portion protrudes over the first electrode sheet and the second end portion is flush with the first electrode sheet. The second alternative describes the case in which the first end portion protrudes over the first electrode sheet and the second end portion is retracted with respect to the first electrode sheet. The third alternative describes the case in which the second end portion protrudes over the first electrode sheet and the first end portion is flush with the first electrode sheet. The fourth alternative describes the case in which the second end portion protrudes over the first electrode sheet and the first end portion is retracted with respect to the first electrode sheet. It is noted that this also applies to an additional second electrode sheet, first separator sheet, and second separator sheet, in case, the battery cell component further comprises one or more of a second electrode sheet, a first separator sheet, and a second separator sheet. Having the first end portion or the second end portion protruding over the first electrode sheet facilitates an electric connection of the first electrode sheet.

According to an example, the one of the first end portion and the second end portion which protrudes over the first electrode sheet comprises an electric connection interface configured to form an electric connection terminal of a battery cell. The present example comprises two alternatives. The first alternative describes the case in which the first end portion protrudes over the first electrode sheet and wherein the first end portion comprises an electric connection interface configured to form an electric connection terminal of a battery cell. The second alternative describes the case in which the second end portion protrudes over the first electrode sheet and wherein the second end portion comprises an electric connection interface configured to form an electric connection terminal of a battery cell. In either of the two alternatives, the electric connection terminal may be understood as a terminal via which a current may flow. Thus, a battery cell equipped with such a battery cell component may be charged by connecting the electric connection terminal to a power source. Alternatively, electric energy stored in the battery cell may be withdrawn from the battery cell using the electric connection terminal. One of the first end portion and the second end portion comprising an electric connection interface for forming an electric connection terminal has the effect that the complexity of a battery cell equipped with such a battery cell component is comparatively small.

According to a second aspect, there is provided a battery cell for a vehicle. The battery cell comprises:
- a battery cell component according to the first aspect, and
- an enclosure, wherein the battery cell component is arranged in the enclosure.

In this context, the enclosure may be made from one or more parts. In case the enclosure is made from more parts, the enclosure may comprise a first, cup-shaped part and a second part formed as a lid for the first, cup-shaped part. The lid may be configured to close the enclosure. The enclosure may also be called can or cell can. The enclosure may be cylindrical, more precisely shaped as a circular cylinder. Thus, the battery cell may be a cylindrical battery cell. As has been explained before, the first electrode sheet may be wound around the elongated core element. This means that the first electrode sheet may not be flat, but bent around the elongated core element. This means that the efficiency and energy density in the battery cell is high. Moreover, such a battery cell is structurally simple.

In an example, the battery cell further comprises an electrolyte. The electrolyte may be arranged in the enclosure together with the battery cell component. The electrolyte may be a fluid.

According to an example, the elongated core element extends through a wall of the enclosure such that one end of the elongated core element is arranged on an outside of the enclosure and forms an electric connection terminal of the battery cell. In other words, the enclosure comprises a wall through which the elongated core element extends. By using the elongated core element as an electric connection terminal of the battery cell, complexity of the battery cell is decreased. This is because no further components or parts are needed to form such an electric connection terminal. Moreover, since the first electrode sheet is electrically coupled to the elongated core element, efficiency of the battery cell may be further improved. This is because electrons may move directly towards the electrically coupled elongated core element.

According to an example, the enclosure is formed by a first, cup-shaped part and a second part formed as a lid for the first, cup-shaped part. The elongated core element extends through the lid. Alternatively, the elongated core element may extend through the first, cup-shaped part. In both alternatives, the end of the elongated core element extending through the lid or the first, cup-shaped part may form a positive electric terminal of the battery cell.

In an example, the battery cell further comprises a sealing member. The sealing member may be a gasket. The sealing member may be arranged on a portion of the elongated core element, which is arranged on the outside of the enclosure or on an inside of the enclosure. The sealing member is configured to seal the elongated core element to the wall of the enclosure. The sealing member may be heat treated to achieve a firm sealing of the elongated core element to the wall of the enclosure. Using the sealing member, electrolyte may be reliably held inside the enclosure. Thus, the safety of the battery cell may be improved.

According to an example, the battery cell component comprises a second electrode sheet. The second electrode sheet is directly electrically coupled to a portion of the enclosure forming an electric terminal of the battery cell. The electric terminal may be understood as a terminal via which a current may flow. Thus, the battery cell may be charged by connecting the electric terminal to a power source. Alternatively, electric energy stored in the battery cell may be used by connecting the electric terminal to an electric load. By directly electrically coupling the second electrode sheet to the portion of the enclosure has the effect that the complexity of the battery cell is decreased.

According to an example, the enclosure is formed by a first, cup-shaped part and a second part formed as a lid for the first, cup-shaped part. The second electrode sheet is directly electrically coupled to the first, cup-shaped part. Alternatively, the second electrode sheet may be directly electrically coupled to the lid. In both alternatives, the part to which the second electrode sheet is directly electrically connected may form a negative electric terminal of the battery cell.

In an example, the portion to which the second electrode sheet is connected to may be a lid of the enclosure. The lid may be arranged on an opposite side of the battery cell, where the elongated core element extends through the wall. In other words, the lid may be arranged on one side of the battery cell and the elongated core element extending through the wall may be arranged on another side of the battery cell.

According to an example, an electric interface coupling the second electrode sheet and the portion of the enclosure forming the electric terminal of the battery cell is arc-shaped or spiral-shaped. In this context, arc-shaped may be understood as the electric interface being curved or arched. This has the effect that a contact surface between the second electrode sheet and the portion of the enclosure is comparatively large. This means that the electric conductivity may be enhanced. Spiral-shaped may be understood as the electric interface forming a spiral or helix. By using a spiral-shaped electric interface a length of a contact surface of the second electrode sheet and the portion of the enclosure may be increased. This has the effect that a space in a battery cell equipped with such a battery cell component may be more efficiently used, increasing energy density and efficiency of the battery cell. Further, the size of the battery cell component may be further reduced.

According to a third aspect, there is provided a method for manufacturing a battery cell component or a battery cell. The method comprising:
- providing an elongated core element extending along a direction of extension and being electrically conductive,
- providing a first electrode sheet, and
- electrically coupling the first electrode sheet to the elongated core element.

In this context, the first electrode sheet may be electrically couplet to the elongated core element substantially over the entire second edge of the first electrode sheet. This means that the whole second edge is electrically coupled to the elongated core element. This has the effect that many electrons may move from the first electrode sheet towards the electrically coupled elongated core element or vice versa. Thus, the efficiency of a battery cell equipped with such a battery cell component manufactured according to the present disclosure may be further enhanced. Further, by electrically coupling the first electrode sheet to the elongated core element, the complexity of a battery cell equipped with such a battery cell component manufactured according to the present disclosure may be decreased. This is because no further components or parts are needed to achieve such electrical connection.

In an example, the first electrode sheet is electrically coupled to the elongated core element via a mechanical connection using a welding process. The welding process may be a laser welding process. Thus, the durability and structural strength of the coupling between the first electrode sheet and the elongated core element may be enhanced.

According to an example, the method further comprises winding the first electrode sheet around the elongated core element. This means that the first electrode sheet is not flat, but bent around the elongated core element. The first electrode sheet may be wound around the elongated core element in several turns. This means that the efficiency and energy density in a battery cell equipped with such a battery cell component manufactured according to the present disclosure may be increased.

According to a fourth aspect, there is provided a vehicle comprising a battery cell component according to the first aspect or a battery cell according to the second aspect. As has been explained before, the battery cell according to the present disclosure has a comparatively high efficiency and energy density as well as a decreased complexity. The same applies to a vehicle equipped with such a battery cell. The high energy density of the battery cell may allow the vehicle to have a comparatively large driving range while using a comparatively compact battery.

It should be noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a vehicle according to the present disclosure having a battery assembly comprising a plurality of battery cells according to the present disclosure, each of the battery cells having a battery cell component according to the present disclosure, wherein the battery cell components and the battery cells are manufactured using a method according to the present disclosure,
- Figure 2: shows a battery cell of the battery assembly of Figure 1 in a more detailed view,
- Figure 3: shows the battery cell of Figure 2 from another perspective and in a partially exploded view,
- Figure 4: shows a portion of the battery cell of Figure 2, wherein one part of the enclosure is not depicted,
- Figure 5: shows a sectional view along plane V of the battery cell of Figure 2.
- Figure 6: schematically shows the battery cell component according to the present disclosure, wherein a first electrode sheet, a first separator sheet, a second electrode sheet, and a second separator sheet are flat and not yet wound around the elongated core element,
- Figure 7: shows a top view along direction VII of the battery cell component of Figure 6, and
- Figure 8: illustrates steps of the method according to the present disclosure for manufacturing a battery cell.

### DETAILED DESCRIPTION

The Figures are merely schematic representations and serve only to illustrate examples of the disclosure. Identical or equivalent elements are in principle provided with the same reference signs.

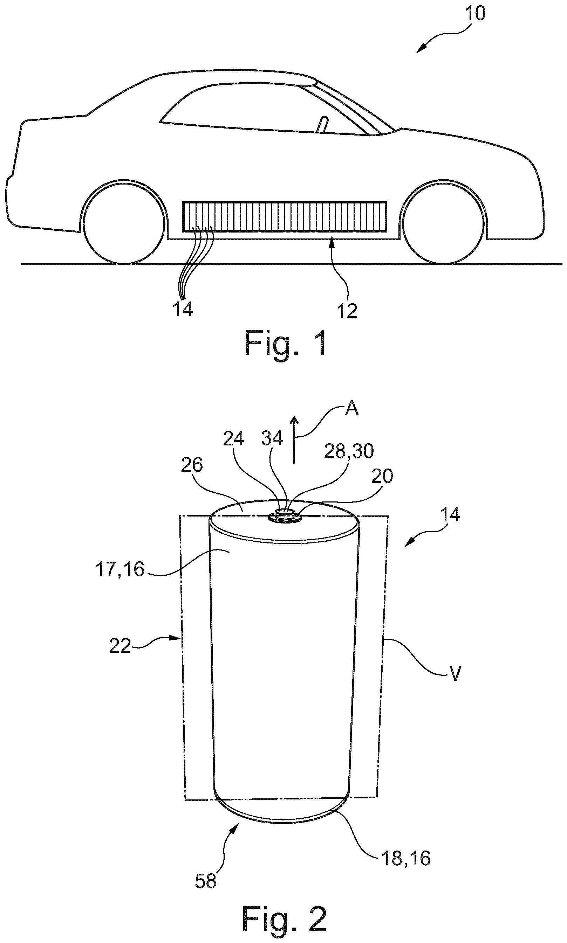

Figure 1 shows a vehicle 10 that comprises a battery assembly 12. In the present example, the battery assembly 12 forms a traction battery of the vehicle 10, where energy for driving the vehicle 10 can be stored. Consequently, the vehicle 10 is a battery electric vehicle.

The battery assembly 12 comprises a plurality of battery cells 14, wherein only some of the battery cells 14 carry a reference sign in Figure 1.

In the present example, the battery cells 14 are cylindrical battery cells 14. This means that the battery cells 14 are generally shaped as a circular cylinder.

Each battery cell 14 comprises an enclosure 16 (see Figure 2).

The enclosure 16 is shaped as a circular cylinder and may also be called a can. In the present example, the enclosure 16 comprises a cup-shaped part 17 and a lid 18 configured to close the cup-shaped part 17.

In the present example, the cup-shaped part 17 is shaped as a circular cylinder which is open at one axial end.

The enclosure 16 of the battery cell 14 is filled with an electrolyte. In the present example, the electrolyte is a fluid.

Each battery cell 14 further comprises a sealing member 20. In more detail, the sealing member 20 is a gasket.

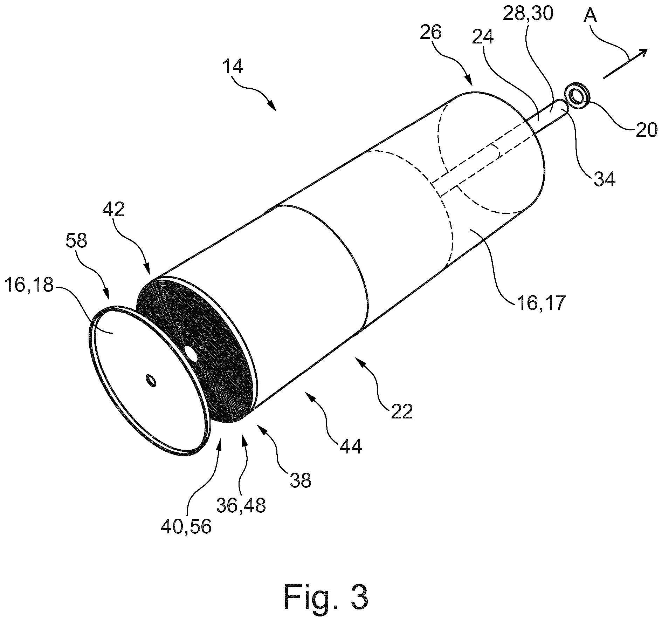

Each battery cell 14 further comprises a battery cell component 22 (see in particular Figure 3).

The battery cell component 22 is arranged in the enclosure 16.

The battery cell component 22 comprises an elongated core element 24.

The elongated core element 24 extends along a direction of extension A.

The elongated core element 24 is electrically conductive and made of a metal material. In more detail, the elongated core element 24 is made of an aluminum material.

The elongated core element 24 is shaped as a circular cylinder. Moreover, the elongated core element 24 has a diameter of 5 mm.

The elongated core element 24 comprises a first end portion 30 and a second end portion 32. The first end portion 30 and the second end portion 32 are arranged at opposite ends of the elongated core element 24.
by using the cathode.

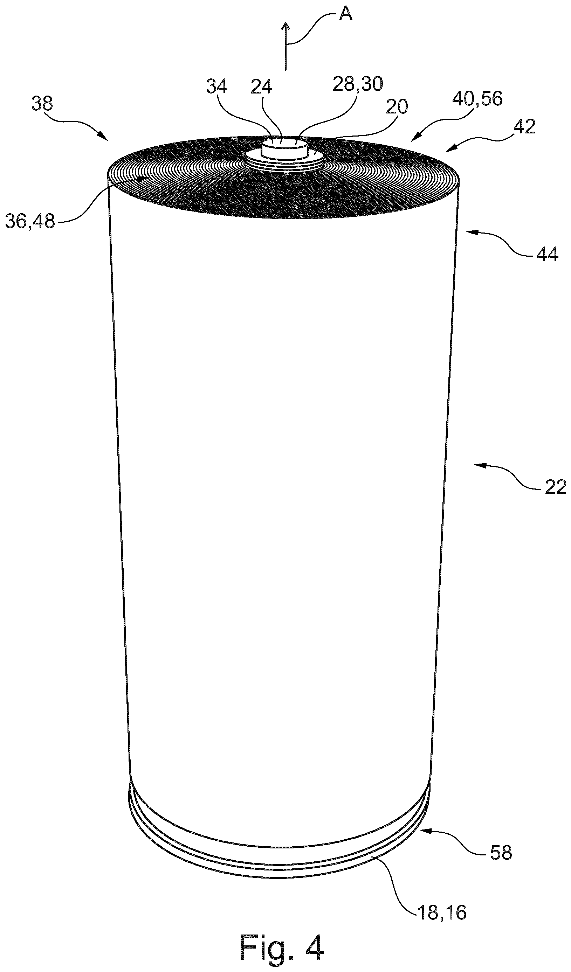

The first end portion 30 of the elongated core element 24 extends through a wall 26 of the enclosure 16, more precisely through an axial end wall of the cup-shaped part 17 of the enclosure, such that the first end portion 30 is arranged on an outside of the enclosure 16 and forms an electric connection terminal 28 of the battery cell 14. The remaining portions of the elongated core element 24 are arranged inside the enclosure 16 (see also Figure 4). In other words, the first end portion 30 comprises an electric connection interface 34 configured to form the electric connection terminal 28 of the battery cell 14.

The sealing member 20 is arranged on the portion of the elongated core element 24, which is arranged on the outside of the enclosure 16. In more detail, the sealing member 20 is arranged on the first end portion 30 of the elongated core element 24.

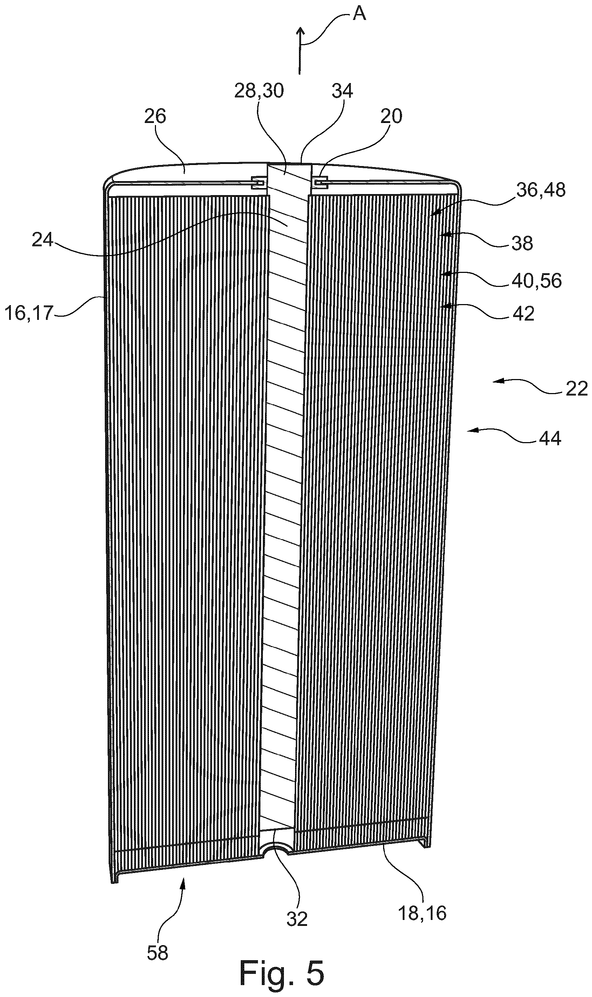

The sealing member 20 seals the elongated core element 24 to the wall 26 of the enclosure 16, more precisely the cup-shaped part 17 of the enclosure 16 (see Figure 5).

The battery cell component 22 further comprises a first electrode sheet 36, a first separator sheet 38, a second electrode sheet 40, and a second separator sheet 42 that are layered and, subsequently, each sheet is wound around the elongated core element 24, thus, forming a jelly roll 44.

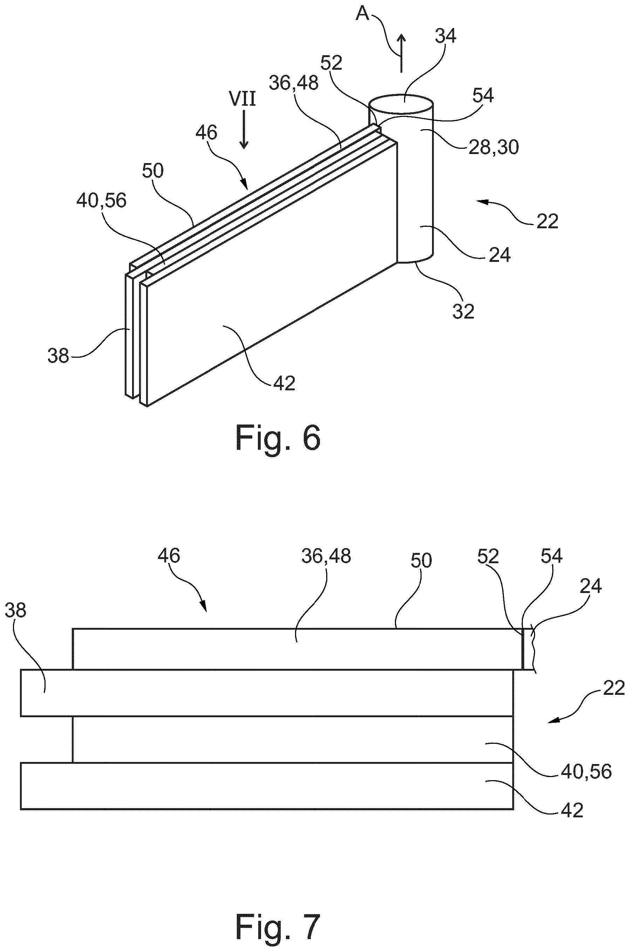

The first electrode sheet 36 and the second electrode sheet 40 are not directly contacting each other (see Figure 6). In this context, the layered arrangement can be seen as jelly layers 46.

The first electrode sheet 36 is electrically coupled to the elongated core element 24 (see Figure 7).

In the present example, the first electrode sheet 36 is a cathode 48. The first electrode sheet 36 is made of aluminum material. Further, the first electrode sheet 36 is a foil.

The first electrode sheet 36 is rectangular.

The first electrode sheet 36 comprises a first edge 50 and a second edge 52.

The first edge 50 is longer than the second edge 52.

The first edge 50 and the second edge 52 are perpendicular to each other.

The first electrode sheet 36 is electrically coupled to the elongated core element 24 substantially over the entire second edge 52.

In more detail, the first electrode sheet 36 is electrically coupled to the elongated core element 24 via a mechanical connection 54 using a welding process. In the present example, the welding process is a laser welding process.

The first electrode sheet 36 has a length of 90 mm.

In this context, the length corresponds to the length of the second edge 52.

The first electrode sheet 36 extends over at least 85 % of the length of the elongated core element 24.

In this context, the length of the elongated core element 24 is measured along the direction of extension A.

In the present example, the first end portion 30 of the core element 24 protrudes over the first electrode sheet 36.

In another example, the second and portion of the core element 24 protrudes over the first electrode sheet 36.

In the present example the second end portion 32 is flush with the first electrode sheet 36.

In another example, the second end portion 32 is retracted with respect to the first electrode sheet 36.

Yet, in another example, the first end portion 30 is flush with the first electrode sheet 36 or is retracted with respect to the first electrode sheet 36.

In the present example, the second electrode sheet 40 is an anode 56. The second electrode sheet 40 is made of copper material. Further, the second electrode sheet 40 is a foil.

The second electrode sheet 40 is directly electrically coupled to a portion of the enclosure 16, forming an electric terminal 58 of the battery cell 14 by using the anode 56.

In this context, and in more detail, the second electrode sheet 40 is directly electrically coupled to the lid 18 of the enclosure 16.

In the present example, an electric interface coupling the second electrode sheet 40 and the portion of the enclosure 16 forming the electric terminal 58 of the battery cell 14, i.e. the lid 18, is spiral-shaped (see also Figure 5).

In another example, the electric interface coupling the second electrode sheet 40 and the portion of the enclosure 16, forms the electric terminal 58 of the battery cell 14 is arc-shaped. In this example, the second electrode sheet 40 may comprise tabs configured for being electrically connected to the portion of the enclosure 16, i.e. the lid 18.

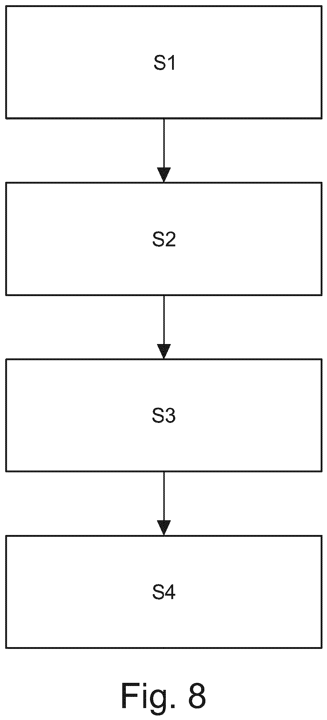

Each battery cell 14 of the vehicle 10 may be manufactured in accordance with the following method (see also Figure 8).

In a first step S 1 of the method, the elongated core element 24 is provided.

The elongated core element 24 extends along the direction of extension A and is electrically conductive.

In a second step S2 of the method, the first electrode sheet 36 is provided. The first electrode sheet 36 is a cathode 48, is made of aluminum material, and is a foil.

In a third step S3 of the method, the first electrode sheet 36 is electrically coupled to the elongated core element 24.

The first electrode sheet 36 is electrically coupled to the elongated core element 24 via the mechanical connection 54 using a welding process, in more detail, a laser welding process.

Further, the first separator sheet 38, the second electrode sheet 40, and the second separator sheet 42 are provided. The second electrode sheet 40 is an anode 56, is made of copper material, and is a foil.

The first separator sheet 38, the second electrode sheet 40, and the second separator sheet 42 are arranged in jelly layers 46 on the first electrode sheet 36. In other words, the first electrode sheet 36, the first separator 38, the second electrode sheet 40 and the second separator sheet 42 are stacked upon one another.

It is noted that the first electrode sheet 36 and the second electrode sheet 40 are not directly electrically contacting each other since the first separator sheet 38 is positioned between the first electrode sheet 36 and the second electrode sheet 40.

Further, the second separator sheet 42 is arranged on the opposite side of the second electrode sheet 40 such that on a first side of the second electrode sheet 40 the first separator sheet 38 is arranged and on a second side of the second electrode sheet 40 the second separator sheet 42 is arranged.

In a fourth step S4 of the method, the first electrode sheet 36 is wound around the elongated core element 24.

Consequently, in the present example, the first separator sheet 38, the second electrode sheet 40, and the second separator sheet 42 are also wound around the elongated core element 24.

Thus, by winding the first electrode sheet 36, the first separator sheet 38, the second electrode sheet 40, and the second separator sheet 42 around the elongated core element 24 the so-called jelly roll 44 is formed.

It is noted that the elongated core element 24, the first electrode sheet 36, the first separator sheet 38, the second electrode sheet 40, and the second separator sheet 42 form the battery cell component 22.

In a further step of the method, the lid 18 of the enclosure 16 is provided.

The lid 18 is electrically coupled to the second electrode sheet 40 via a mechanical connection using a welding process, in more detail, a laser welding process. Thus, the lid 18 forms the electric terminal 58.

In a further step of the method, the sealing member 20 is provided.

The sealing member 20 is arranged on the first end portion 30 of the elongated core element 24.

In a further step of the method, the cup-shaped part 17 of the enclosure 16 is provided.

Subsequently, the cup-shaped part 17 is filled with the electrolyte and the battery cell component 22 is inserted into the enclosure 16.

The first end portion 30 is arranged on the outside of the enclosure 16, forming the electric connection terminal 28.

In a further step of the method, the lid 18 is mechanically connected to the cup-shaped part 17 using a welding process, in more detail, using a laser welding process. In other words, the cup-shaped part 17 is closed using the lid 18.

Subsequently, the sealing member 20 is heat treated to firmly seal the elongated core element 24 to the wall 26 of the enclosure 16.

As used herein, the phrase "at least one" in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: vehicle
- 12: battery assembly
- 14: battery cell
- 16: enclosure
- 17: cup-shaped part of the enclosure
- 18: lid
- 20: sealing member
- 22: battery cell component
- 24: core element
- 26: wall
- 28: electric connection terminal
- 30: first end portion
- 32: second end portion
- 34: electric connection interface
- 36: first electrode sheet
- 38: first separator sheet
- 40: second electrode sheet
- 42: second separator sheet
- 44: jelly roll
- 46: jelly layers
- 48: cathode
- 50: first edge
- 52: second edge
- 54: mechanical connection
- 56: anode
- 58: electric terminal
- A: direction of extension

- S1: first step
- S2: second step
- S3: third step
- S4: fourth step

## Claims

1. A battery cell component (22) for a battery cell (14) of a vehicle (10), the battery cell component (22) comprising:
- an elongated core element (24) extending along a direction of extension (A) and being electrically conductive, and
- a first electrode sheet (36), wherein the first electrode sheet (36) is electrically coupled to the elongated core element (24) and wherein the first electrode sheet (36) is windable or wound around the elongated core element (24).

2. The battery cell component (22) of claim 1, wherein the elongated core element (24) has a cylindrical shape.

3. The battery cell component (22) of any one of the preceding claims, further comprising one or more of a second electrode sheet (40), a first separator sheet (38), and a second separator sheet (42),
wherein the one or more of the second electrode sheet (40), the first separator sheet (38), and the second separator sheet (42) and the first electrode sheet (36) are layered, and
wherein the one or more of the second electrode sheet (40), the first separator sheet (38), and the second separator sheet (42) are windable or wound around the elongated core element (24).

4. The battery cell component (22) of claim 3, wherein the first electrode sheet (36) or the second electrode sheet (40) is a cathode (48) and the respective other one of the first electrode sheet (36) or the second electrode sheet (40) is an anode (56).

5. The battery cell component (22) of any one of the preceding claims, wherein the first electrode sheet (36) extends over at least 85 % of a length of the elongated core element (24), wherein the length of the elongated core element (24) is measured along the direction of extension (A).

6. The battery cell component (22) of any one of the preceding claims, wherein the first electrode sheet (36) is rectangular and comprises a first edge (50) and a second edge (52), wherein the first edge (50) is longer than the second edge (52), and wherein the first electrode sheet (36) is electrically coupled to the elongated core element (24) substantially over the entire second edge (52).

7. The battery cell component (22) of any one of the preceding claims, wherein the elongated core element (24) comprises a first end portion (30) and a second end portion (32), wherein the first end portion (30) and the second end portion (32) are arranged at opposite ends of the elongated core element (24), and wherein one of the first end portion (30) and the second end portion (32) protrudes over the first electrode sheet (36) and the respective other one of the first end portion (30) and the second end portion (32) is flush with the first electrode sheet (36) or is retracted with respect to the first electrode sheet (36).

8. The battery cell component (22) of claim 7, wherein the one of the first end portion (30) and the second end portion (32) which protrudes over the first electrode sheet (36) comprises an electric connection interface (34) configured to form an electric connection terminal (28) of a battery cell (14).

9. A battery cell (14) for a vehicle (10), the battery cell (14) comprising:
- a battery cell component (22) according to any one of the preceding claims, and
- an enclosure (16), wherein the battery cell component (22) is arranged in the enclosure (16).

10. The battery cell (14) of claim 9, wherein the elongated core element (24) extends through a wall (26) of the enclosure (16) such that one end of the elongated core element (24) is arranged on an outside of the enclosure (16) and forms an electric connection terminal (28) of the battery cell (14).

11. The battery cell (14) of claim 9 or 10, wherein the battery cell component (22) comprises a second electrode sheet (40) and wherein the second electrode sheet (40) is directly electrically coupled to a portion of the enclosure (16) forming an electric terminal (58) of the battery cell (14).

12. The battery cell (14) of claim 11, wherein an electric interface coupling the second electrode sheet (40) and the portion of the enclosure (16) forming the electric terminal (58) of the battery cell (14) is arc-shaped or spiral-shaped.

13. A method for manufacturing a battery cell component (22) or a battery cell (14), the method comprising:
- providing an elongated core element (24) extending along a direction of extension (A) and being electrically conductive,
- providing a first electrode sheet (36), and
- electrically coupling the first electrode sheet (36) to the elongated core element (24).

14. The method of claim 13, further comprising winding the first electrode sheet (36) around the elongated core element (24).

15. A vehicle (10) comprising a battery cell component (22) according to any one of the claims 1 to 8 or a battery cell (14) according to any one of claims 9 to 12.

## Amended claims

### Amended claims in accordance with Rule 137(2) EPC.

1. A battery cell component (22) for a battery cell (14) of a vehicle (10), the battery cell component (22) comprising:
- an elongated core element (24) extending along a direction of extension (A) and being electrically conductive,
- a first electrode sheet (36), wherein the first electrode sheet (36) is electrically coupled to the elongated core element (24) and wherein the first electrode sheet (36) is windable or wound around the elongated core element (24),
- a second electrode sheet (40), a first separator sheet (38), and a second separator sheet (42), wherein the second electrode sheet (40), the first separator sheet (38), and the second separator sheet (42) and the first electrode sheet (36) are layered, wherein the second electrode sheet (40), the first separator sheet (38), and the second separator sheet (42) are windable or wound around the elongated core element (24),
wherein the elongated core element (24) comprises a first end portion (30) and a second end portion (32), wherein the first end portion (30) and the second end portion (32) are arranged at opposite ends of the elongated core element (24),
wherein one of the first end portion (30) and the second end portion (32) protrudes over the first electrode sheet (36) and the respective other one of the first end portion (30) and the second end portion (32) is flush with the first electrode sheet (36) or is retracted with respect to the first electrode sheet (36), and
wherein one of the first end portion (30) and the second end portion (32) protrudes over the second electrode sheet (40), the first separator sheet (38) and the second separator sheet (42) and the respective other one of the first end portion (30) and the second end portion (32) is retracted with respect to the second electrode sheet (40), the first separator sheet (38) and the second separator sheet (42).

2. The battery cell component (22) of claim 1, wherein the elongated core element (24) has a cylindrical shape.

3. The battery cell component (22) of claim 1 or 2, wherein the first electrode sheet (36) or the second electrode sheet (40) is a cathode (48) and the respective other one of the first electrode sheet (36) or the second electrode sheet (40) is an anode (56).

4. The battery cell component (22) of any one of the preceding claims, wherein the first electrode sheet (36) extends over at least 85 % of a length of the elongated core element (24), wherein the length of the elongated core element (24) is measured along the direction of extension (A).

5. The battery cell component (22) of any one of the preceding claims, wherein the first electrode sheet (36) is rectangular and comprises a first edge (50) and a second edge (52), wherein the first edge (50) is longer than the second edge (52), and wherein the first electrode sheet (36) is electrically coupled to the elongated core element (24) substantially over the entire second edge (52).

6. The battery cell component (22) of any one of the preceding claims, wherein the one of the first end portion (30) and the second end portion (32) which protrudes over the first electrode sheet (36) comprises an electric connection interface (34) configured to form an electric connection terminal (28) of a battery cell (14).

7. A battery cell (14) for a vehicle (10), the battery cell (14) comprising:
- a battery cell component (22) according to any one of the preceding claims, and
- an enclosure (16), wherein the battery cell component (22) is arranged in the enclosure (16).

8. The battery cell (14) of claim 7, wherein the elongated core element (24) extends through a wall (26) of the enclosure (16) such that one end of the elongated core element (24) is arranged on an outside of the enclosure (16) and forms an electric connection terminal (28) of the battery cell (14).

9. The battery cell (14) of claim 7 or 8, wherein the battery cell component (22) comprises a second electrode sheet (40) and wherein the second electrode sheet (40) is directly electrically coupled to a portion of the enclosure (16) forming an electric terminal (58) of the battery cell (14).

10. The battery cell (14) of claim 9, wherein an electric interface coupling the second electrode sheet (40) and the portion of the enclosure (16) forming the electric terminal (58) of the battery cell (14) is arc-shaped or spiral-shaped.

11. A method for manufacturing a battery cell component (22) according to any one of claims 1 to 6 or a battery cell (14) according to any one of claims 7 to 10, the method comprising:
- providing an elongated core element (24) extending along a direction of extension (A) and being electrically conductive,
- providing a first electrode sheet (36), and
- electrically coupling the first electrode sheet (36) to the elongated core element (24).

12. The method of claim 11, further comprising winding the first electrode sheet (36) around the elongated core element (24).

13. A vehicle (10) comprising a battery cell component (22) according to any one of the claims 1 to 6 or a battery cell (14) according to any one of claims 7 to 10.
